(19) Europäisches Patentamt
European Patent Office
Office européen des brevets

(11) **EP 4 787 521 A1**

(12) **EUROPEAN PATENT APPLICATION**
published in accordance with Art. 153(4) EPC

(43) Date of publication:
**05.08.2026 Bulletin 2026/32**

(21) Application number: **24895430.7**

(22) Date of filing: **15.05.2024**

(51) International Patent Classification (IPC):
$H01M\ 10/0525^{(2010.01)}$  $H01M\ 10/0569^{(2010.01)}$
$H01M\ 10/0567^{(2010.01)}$  $H01M\ 10/42^{(2006.01)}$

(52) Cooperative Patent Classification (CPC):
Y02E 60/10

(86) International application number:
**PCT/CN2024/093270**

(87) International publication number:
**WO 2025/112319 (05.06.2025 Gazette 2025/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.11.2023 CN 202311598064**

(71) Applicant: **Sunwoda Mobility Energy Technology
Co., Ltd.
Shenzhen, Guangdong 518107 (CN)**

(72) Inventors:
• **CAI, Taotao**
  **Shenzhen, Guangdong 518107 (CN)**
• **LV, Guoxian**
  **Shenzhen, Guangdong 518107 (CN)**
• **QIAO, Feiyan**
  **Shenzhen, Guangdong 518107 (CN)**

(74) Representative: **Metida
Gyneju str. 16
01109 Vilnius (LT)**

(54) **SECONDARY BATTERY AND ELECTRIC DEVICE**

(57) Disclosed are a secondary battery and an electrical device. The secondary battery employs a combination of high-viscosity and low-viscosity solvents, along with specific types of electrolyte additives, to prepare an electrolyte. Further, the electrolyte and the electrode resistivity of the negative electrode plate are adopted to establish a parameter relationship, so that the overall electrolyte in an increased amount is injected, without affecting the electron conduction on the negative electrode, thereby enhancing the electrolyte wetting effect.

On the other hand, the unique selection of electrolyte components enables the electrolyte to exhibit a low degree of interfacial side reactions during the operation of the secondary battery, a low probability of gas generation at room temperature or high temperatures, and high ionic conductivity. The secondary battery exhibits excellent kinetic performance, a low risk of high-temperature gas production and direct current resistance (DCR) growth, and ideal fast-charging application performance.

EP 4 787 521 A1

**Description**

**CROSS REFERENCE TO RELATED APPLICATIONS**

The present disclosure claims priority to Chinese Patent Application No. CN202311598064.1 filed on November 27, 2023, the entire contents of which are incorporated herein by reference.

**TECHNICAL FIELD**

The present disclosure relates to the field of battery technology, and in particular to a secondary battery and an electrical device.

**BACKGROUND**

One technical bottleneck for secondary batteries, particularly lithium-ion secondary batteries, lies in their insufficient rate performance when used as power batteries. Especially during a high-rate charging process, the polarization effect of various materials significantly reduces the actual capacity of a secondary battery. On the other hand, during a charging process, the large overpotential of lithiated graphite will cause the electrode potential to drop below 0V, leading to the deposition of metallic lithium on the negative electrode. This adversely affects the lifespan of the battery and increases the risk of internal short circuits. Furthermore, the thermal stability of existing lithium-ion secondary batteries requires improvement, as they are prone to thermal runaway risks in some fast-charging applications.
To improve the overall performance of lithium-ion secondary batteries, researchers modify the electrolyte or the negative electrode to effectively adapt to fast-charging scenarios. However, these modified products are developed under laboratory conditions without integration and practical simulation. When applied to actual full cells, these products cannot achieve the performance observed under laboratory conditions.

**SUMMARY OF THE DISCLOSURE**

An objective of the present disclosure is to overcome shortcomings of the prior art and provide a secondary battery and an electrical device. The secondary battery of the present disclosure is provided on basis of the selection of an electrolyte with specific properties and in conjunction with a parameter relationship between the electrolyte and an electrode resistivity of the negative electrode plate in actual scenarios. Thus, the secondary battery of the present disclosure can effectively enhance the wettability of the electrolyte in the negative electrode, while ensuring that the electron conductivity of the negative electrode itself does not degrade. The electrolyte exhibits a low extent of interfacial side reactions during operation of the secondary battery, a low probability of gas generation at room temperature or high temperature, and high ion conductivity. The secondary battery also exhibits excellent kinetic performance and good safety performance, making it highly suitable for fast charging scenarios.
To achieve the above objectives, in a first aspect of the present disclosure, a secondary battery is provided, including a positive electrode plate, a negative electrode plate, a separator, and an electrolyte; where the electrolyte includes a solvent and an additive; the additive includes a first additive, a second additive, and a third additive; the solvent includes a low-viscosity organic solvent and a high-viscosity organic solvent, a viscosity of the low-viscosity organic solvent is $\leq 0.7$ mPa·s, and a viscosity of the high-viscosity organic solvent is $> 0.7$ mPa·s;

the secondary battery satisfies a relationship as follows:

$$0.75 \leq \frac{IC \times R + e^{\gamma}}{d \times E + 10^{\alpha+\beta}} \leq 1.20$$

where IC, in g/Ah, represents an injection coefficient of the electrolyte;
E, in $\Omega \cdot$cm, represents an electrode resistivity of the negative electrode plate, d=6.70;
R represents a mass ratio of the low-viscosity organic solvent to a total solvent in the electrolyte;
$\alpha$ represents a mass percentage of the first additive in the electrolyte;
$\beta$ represents a mass percentage of the second additive in the electrolyte;
$\gamma$ represents a mass percentage of the third additive in the electrolyte;
the first additive includes a carbonate compound; the second additive includes a sulfur-containing compound; the third additive includes a phosphorus-containing compound and/or a boron-containing compound.

As an embodiment of the present disclosure, the secondary battery satisfies at least one selected from the group consisting of following conditions:

(1)

$$2.30 \leq IC \leq 2.80;$$

(2)

$$0.210 \leq E \leq 0.253;$$

(3)

$$0.40 \leq R \leq 0.80;$$

(4)

$$0.1\% \leq \alpha \leq 1.0\%;$$

(5)

$$0.1\% \leq \beta \leq 3.0\%;$$

and
(6)

$$0.1\% \leq \gamma \leq 2\%.$$

As an embodiment of the present disclosure, the low-viscosity organic solvent includes at least one selected from the group consisting of dimethyl carbonate, ethyl methyl carbonate, methyl acetate, methyl propionate, methyl butyrate, methyl acetate, ethyl acetate, propyl acetate, ethyl butyrate, and propyl propionate.

As an embodiment of the present disclosure, the secondary battery satisfies at least one selected from the group consisting of following conditions:

(1) the carbonate compound includes at least one selected from the group consisting of vinylene carbonate and fluoroethylene carbonate;
(2) the sulfur-containing compound includes at least one selected from the group consisting of ethylene sulfate, 1,3-propanesultone, propene-1,3-sultone, ethylene sulfite, methylene methanedisulfonate, and 1,4-butanesultone;
(3) the phosphorus-containing compound includes at least one selected from the group consisting of tris(trimethylsilyl) phosphate and lithium difluorophosphate;
(4) the boron-containing compound includes lithium difluoro(oxalato)borate.

As an embodiment of the present disclosure, the high-viscosity organic solvent includes at least one selected from the group consisting of ethylene carbonate, propylene carbonate, butylene carbonate, diethyl carbonate, methyl propyl carbonate, diphenyl carbonate, and γ-butyrolactone.

As an embodiment of the present disclosure, the high-viscosity organic solvent includes at least one selected from the group consisting of ethylene carbonate, propylene carbonate, and diethyl carbonate, and the low-viscosity organic solvent includes ethyl methyl carbonate and/or ethyl acetate.

As an embodiment of the present disclosure, a ratio of the $\alpha$ to the $\beta$ is in a range of from 0.25 to 0.5.

As an embodiment of the present disclosure, the negative electrode plate includes a negative electrode active material, and the negative electrode active material includes graphite.

In a second aspect of the present disclosure, provided is an electrical device, including the secondary battery, and the secondary battery serves as a power supply for the electrical device.

The beneficial effects of the present disclosure are as follows.

In the present disclosure, a secondary battery and an electrical device are provided. The secondary battery of the present disclosure employs a combination of high-viscosity and low-viscosity solvents, along with specific types of electrolyte additives, to prepare an electrolyte. Further, this electrolyte is coordinated with the electrode resistivity of the negative electrode, so that the overall electrolyte in an increased amount is injected, without affecting the electron conduction on the negative electrode, thereby enhancing the electrolyte wetting effect. On the other hand, the unique selection of electrolyte components enables the electrolyte to exhibit a low degree of interfacial side reactions during the operation of the secondary battery, a low gas production at high temperatures, and high ionic conductivity. The secondary battery exhibits excellent kinetic performance, a low risk of high-temperature gas production and direct current resistance (DCR) growth, and ideal fast-charging application performance.

## DETAILED DESCRIPTION

To make the objective, technical solutions, and advantages of the embodiments of the present disclosure clearer, the technical solutions in the embodiments of the present disclosure will be clearly and completely described below. Obviously, the described embodiments are only a part of the embodiments of the present disclosure, rather than all of them. Based on the embodiments of the present disclosure, all other embodiments obtained by those skilled in the art, without creative effort, shall fall within the protection scope of the present disclosure.

In the present disclosure, an open-ended technical feature includes a close-ended technical solution composed of the listed feature, and also includes an open-ended technical solution including the listed feature.

In the present disclosure, unless otherwise specified, any numerical range is considered continuous, and includes minimum and maximum values of the numerical range and any value between the minimum and maximum values. Further, when the numerical range refers to integers, any integer between the minimum and maximum values of the numerical range is included. Additionally, when a plurality of ranges are provided to describe a feature or characteristic, the plurality of ranges can be combined. In other words, unless otherwise indicated, all ranges disclosed herein shall be understood to encompass any and all sub-ranges belonging to the ranges.

In the present disclosure, there is no special limitation on specific dispersion and stirring methods.

Unless otherwise specified, all reagents or instruments used in the present disclosure are conventional products that can be obtained commercially.

The present disclosure is further illustrated below with reference to specific embodiments.

In an embodiment of the present disclosure, a secondary battery is provided, including a positive electrode plate, a negative electrode plate, a separator, and an electrolyte; where the electrolyte includes a solvent and an additive; the additive includes a first additive, a second additive, and a third additive; the solvent includes a low-viscosity organic solvent and a high-viscosity organic solvent, a viscosity of the low-viscosity organic solvent is $\leq 0.7$ mPa·s, and a viscosity of the high-viscosity organic solvent is $> 0.7$ mPa·s;

the secondary battery satisfies a relationship as follows:

$$0.75 \leq \frac{IC \times R + e^{\gamma}}{d \times E + 10^{\alpha+\beta}} \leq 1.20$$

where IC, in g/Ah, represents an injection coefficient of the electrolyte;
E, in $\Omega$·cm, represents an electrode resistivity of the negative electrode plate, d=6.70;
R represents a mass ratio of the low-viscosity organic solvent to a total solvent in the electrolyte;
$\alpha$ represents a mass percentage of the first additive in the electrolyte;
$\beta$ represents a mass percentage of the second additive in the electrolyte;
$\gamma$ represents a mass percentage of the third additive in the electrolyte;
the first additive includes a carbonate compound; the second additive includes a sulfur-containing compound; the third additive includes a phosphorus-containing compound and/or a boron-containing compound.

The systemic coordination of a lithium-ion secondary battery is a critical factor affecting its performance. For instance, a coordination performance between an electrolyte and a negative electrode influences the balance between the electrochemical performance and safety performance of a lithium-ion battery. During the electrolyte filling and subsequent wetting process of the negative electrode plate, there is a correlation between the particle spacing of an active material in the negative electrode plate and the wetting effect of the electrolyte. When the particle spacing of the active material is in an appropriate range, the electrolyte exhibits a better wetting effect, resulting in an enhanced lithium-ion conductivity of the electrolyte in the negative electrode. Simultaneously, the appropriate range of the particle spacing also ensures an electron conductivity between particles. Therefore, coordinating the relationship between the two factors can effectively improve the electrochemical performance of the lithium-ion battery. Furthermore, during the operation of a secondary battery, loss of the electrolyte may occur and the electrolyte may also undergo interfacial side reactions. Therefore, it is essential to ensure a sufficient amount of the electrolyte in the secondary battery. However, if the electrolyte composition is inappropriate, increasing the addition amount of the electrolyte will increase the interfacial impedance and the active lithium consumption, which is detrimental to the kinetic performance and cycling life of the secondary battery. On the other hand, after the negative electrode plate is rolled, more planes become parallel to a surface of the negative electrode plate, thereby altering the degree of contact between active material particles, as well as the degree of contact between the active material and the binder. Under this condition, when measuring an electrode resistivity, the rolled negative electrode plate, compared to its loose state, exhibits a change in the penetration efficiency of a current applied to the negative electrode plate. While the electrode resistivity of the negative electrode plate is related to electrolyte infiltration and ion conduction, the inventors have found that the electrode resistivity of the negative electrode plate does not directly correspond to physical properties, such as compaction density (with the increase of the compaction density, the electrode resistivity of the negative electrode plate does not change linearly). Therefore, the secondary battery of the present disclosure, on basis of the selection of electrolyte with specific properties and in conjunction with the parameter relationship between the electrolyte and the electrode resistivity of the negative electrode, can effectively enhance the wettability of the electrolyte in the negative electrode, while ensuring that the electron conductivity of the negative electrode itself does not degrade. Additionally, it can also reduce the extent of interfacial side reactions of the electrolyte during operation of the secondary battery, thereby resulting in low gas production and high ion conductivity of the battery at high temperatures. As a result, the secondary battery of the present disclosure exhibits excellent kinetic performance and good safety performance, making it highly suitable for fast charging scenarios.

In some embodiments, $2.30 \leq IC \leq 2.80$. For example, the injection coefficient of the electrolyte IC, in g/Ah, may be any one selected from the group consisting of 2.30 g/Ah, 2.35 g/Ah, 2.40 g/Ah, 2.45 g/Ah, 2.50 g/Ah, 2.55 g/Ah, 2.60 g/Ah, 2.65 g/Ah, 2.70 g/Ah, 2.75 g/Ah, and 2.80 g/Ah, or a range defined by any two of the above values.

The injection coefficient of the electrolyte is related to the performance of the secondary battery. When the injection coefficient is fallen within the above range, lithium ions can be effectively conducted during the charging and discharging process, thereby ensuring an actual capacity of the secondary battery, extending its lifespan, and maintaining a high energy density. Therefore, the injection coefficient within the above range is beneficial for improving the overall performance of the secondary battery.

Specifically, a measurement method of the injection coefficient (IC) of the electrolyte is as follows: weighing a total mass of a battery and recording the total mass of the battery as $m_1$; draining an electrolyte from the battery and refilling the battery with dimethyl carbonate to thoroughly wet an interior of the battery and wash out a residual lithium salt; repeating the washing step three times; drying the battery, with its opening exposed, at 80 °C for 24 hours and ensuring that any residual dimethyl carbonate solvent is completely removed; weighing a dried battery and recording a mass of the dried battery as $m_2$; calculating an original mass, m, of the electrolyte in the battery according to a formula as follows: $m = m_1 - m_2$; and calculating the injection coefficient (IC) of the electrolyte according to a formula as follows: $IC = C/m$, where C represents a design capacity of the battery.

In some embodiments, $0.210 \leq E \leq 0.253$. The electrode resistivity E, in $\Omega \cdot cm$, of the negative electrode plate may be any one selected from the group consisting of 0.210 $\Omega \cdot cm$, 0.215 $\Omega \cdot cm$, 0.220 $\Omega \cdot cm$, 0.225 $\Omega \cdot cm$, 0.230 $\Omega \cdot cm$, 0.240 $\Omega \cdot cm$, 0.250 $\Omega \cdot cm$, and 0.253 $\Omega \cdot cm$, or a range defined by any two of the above values.

As described above, the intercalation and/or deintercalation efficiency of lithium ions in the negative electrode and the wettability of the electrolyte affect the electrode resistivity of the negative electrode plate. When the electrode resistivity of the negative electrode plate is defined within the aforementioned range, it can effectively ensure a high energy density for the secondary battery and can prevent the failure of ion transport in the negative electrode plate.

The electrode resistivity of the negative electrode plate is directly measured using a four-point probe method. Specifically, it is measured using an ST2258C multi-functional digital four-point probe tester, and an average value is taken from three parallel measurements.

In some embodiments, $0.40 \leq R \leq 0.80$. For example, the mass ratio R of the low-viscosity organic solvent to the total solvent in the electrolyte may be any one selected from the group consisting of 0.40, 0.45, 0.50, 0.55, 0.60, 0.65, 0.70, 0.75, and 0.80, or a range defined by any two of the above values.

When the mass ratio R of the low-viscosity organic solvent to the total solvent in the electrolyte falls within the aforementioned range, it can ensure that a viscosity of the total electrolyte falls within a reasonable range. This results in better wettability of the electrolyte in the negative electrode plate, facilitates lithium-ion conduction and reduces gas generation at high temperatures.

Specifically, the R, $\alpha$, $\beta$, and $\gamma$ are measured using a method as follows: firstly, a content of each component in the electrolyte is measured by combining quantitative analysis of the electrolyte, qualitative analysis of organic matters, and ionic component analysis. The quantitative analysis of the electrolyte is performed with reference to Chinese standard GB/T 9722-2006, "Chemical Reagent - General Rules for Gas Chromatography". Specific test conditions are as follows: flame ionization detector (FID); detector temperature: 300 °C; inlet temperature: 250 °C; split ratio: 100:1; injection volume: 0.2μL; chromatographic column: KB-200, with a size of 60 m×0.32mm×0.50μm. The qualitative analysis of organic matters is performed with reference to Chinese standard GB/T 9722-2006, "General Rules for Mass Spectrometric Analysis". Specific test conditions are as follows: ion source temperature for mass spectrometer (MS): 230 °C; inlet temperature: 240 °C; split ratio: 150:1; injection volume: 0.2μ L; chromatographic column: HP-5MS, with a size of 30m ×0.32mm× 0.25μm. The ionic component analysis is performed with reference to Chinese standards GB/T 19282-2014, "Analytical Method for Lithium Hexafluorophosphate", and GB/T 34672-2017, "General Rules for Ion Chromatography". Pretreatment of an electrolyte sample: 1g of a sample, subjected to a 100-fold dilution; eluent concentration: 4.1 mmol/L $Na_2CO_3$ & 2.7mmol/L $NaHCO_3$ & 20% acetonitrile & 0.05mol/L methanesulfonic acid; test time: 65min. Secondly, mass ratios of the respective low-viscosity solvents to the total solvent in the electrolyte are summed to obtain R. Finally, the $\alpha$, $\beta$, and $\gamma$ are respectively measured using the method described above.

In some embodiments, $0.1\% \leq \alpha \leq 1.0\%$. For example, the $\alpha$ may be any one selected from the group consisting of 0.1%, 0.2%, 0.3%, 0.5%, 0.8%, and 1%, or a range defined by any two of the above values. More preferably, $0.2\% \leq \alpha \leq 0.5\%$.

In some embodiments, $0.1\% \leq \beta \leq 3.0\%$. For example, the $\beta$ may be any one selected from the group consisting of 0.1%, 0.2%, 0.3%, 0.5%, 0.8%, 1%, 2%, and 3%, or a range defined by any two of the above values. More preferably, $1\% \leq \beta \leq 1.5\%$.

In some embodiments, $0.1\% \leq \gamma \leq 2\%$. For example, the $\gamma$ may be any one selected from the group consisting of 0.1%, 0.2%, 0.3%, 0.5%, 0.8%, 1%, 2%, and 3%, or a range defined by any two of the above values.

More preferably, $1\% \leq \gamma \leq 1.5\%$.

The $\alpha$ represents a mass percentage of the first additive in the electrolyte, the $\beta$ represents a mass percentage of the second additive in the electrolyte, and the $\gamma$ represents a mass percentage of the third additive in the electrolyte. Using the three additives together and controlling their mass percentages in certain ranges can effectively improve the cycle performance of the secondary battery, lower the risk of high-temperature gas generation and direct current resistance (DCR) growth, and reduce side reactions caused by using any an additive alone. The three additives work together and mutually balance with each other. When the three additives are controlled within the above ranges, the secondary battery not only can maintain cycle stability, but also can exhibit a low probability of high-temperature gas generation and excellent kinetic performance, making it highly suitable for fast charging conditions.

In some embodiments, a compaction density, PD, of the negative electrode plate satisfies a relationship of 1.35 $g/cm^3 \leq PD\ g/cm^3 \leq 1.78\ g/cm^3$. For example, the compaction density, PD, of the negative electrode plate may be any one selected from the group consisting of 1.35 $g/cm^3$, 1.40 $g/cm^3$, 1.45 $g/cm^3$, 1.50 $g/cm^3$, 1.55 $g/cm^3$, 1.60 $g/cm^3$, 1.65 $g/cm^3$, 1.70 $g/cm^3$, and 1.78 $g/cm^3$, or a range defined by any two of the above values. The compaction density of the negative electrode plate is related to the intercalation/deintercalation efficiency of lithium-ions in the negative electrode and the wettability of the electrolyte. When the compaction density of the negative electrode plate is defined within the above range, it can effectively reduce the risk of internal short circuits caused by particle detachment from the negative electrode plate, while ensuring a high energy density for the secondary battery. In some embodiments, the low-viscosity organic solvent includes at least one selected from the group consisting of dimethyl carbonate, ethyl methyl carbonate, methyl acetate, methyl propionate, methyl butyrate, methyl acetate, ethyl acetate, propyl acetate, ethyl butyrate, and propyl propionate.

In some embodiments, the high-viscosity organic solvent includes at least one selected from the group consisting of ethylene carbonate, propylene carbonate, butylene carbonate, diethyl carbonate, methyl propyl carbonate, diphenyl carbonate, and $\gamma$-butyrolactone.

In some embodiments, the carbonate compound includes at least one selected from the group consisting of vinylene carbonate, vinyl ethylene carbonate, and fluoroethylene carbonate.

In some embodiments, the sulfur-containing compound includes at least one selected from the group consisting of ethylene sulfate, 1,3-propanesultone, propene-1,3-sultone, ethylene sulfite, methylene methanedisulfonate, and 1,4-butanesultone.

In some embodiments, the phosphorus-containing compound includes at least one selected from the group consisting of tris(trimethylsilyl)phosphate and lithium difluorophosphate.

In some embodiments, the boron-containing compound includes lithium difluoro(oxalato)borate.

In the electrolyte, a combined use of the three additives can effectively suppress the risk of high-temperature gas generation that may arise from low-viscosity solvents, while preventing the deterioration of DCR performance of the secondary battery. In particular, the mass percentages of the three additives falling within the parameter relationship described in the present disclosure can lead to better overall electrochemical performance of the secondary battery.

In some embodiments, the high-viscosity organic solvent includes at least one selected from the group consisting of ethylene carbonate, propylene carbonate, and diethyl carbonate, and the low-viscosity organic solvent includes ethyl methyl carbonate and/or ethyl acetate.

In some embodiments, the electrolyte includes an electrolyte salt, and the electrolyte salt includes at least one selected from the group consisting of lithium hexafluorophosphate, lithium bis(fluorosulfonyl)imide, lithium bis(trifluoromethanesulfonyl)imide, lithium tetrafluoroborate, lithium perchlorate, lithium tetrafluoro(oxalato)phosphate, lithium difluorobis(oxalato)phosphate, and lithium bis(oxalato) borate.

More preferably, the electrolyte salt is lithium hexafluorophosphate.

In the electrolyte system of the present disclosure, lithium hexafluorophosphate exhibits ideal ion transport number and dissociation constant, while also demonstrating better environmental resistance and electrode compatibility.

More preferably, a mass percentage of the electrolyte salt in the electrolyte is 10-20 wt%.

In some embodiments, a ratio of the $\alpha$ to the $\beta$ (i.e., $\alpha:\beta$) is 0.25-0.5.

When the ratio of the $\alpha$ to the $\beta$ between the first additive and the second additive is within the above range, the secondary battery can further achieve an extended cycle life, better safety performance and less high-temperature gas generation.

More preferably, a ratio of the $\alpha$ to the $\gamma$ (i.e., $\alpha:\gamma$) is 0.12-0.5; and a ratio of the $\beta$ to the $\gamma$ (i.e., $\beta:\gamma$) is 0.6-1.5. When these conditions are satisfied, the secondary battery can further achieve a better overall electrochemical performance.

In some embodiments, the negative electrode plate includes a negative electrode active material, and the negative electrode active material includes graphite.

More preferably, a ratio of a particle size $Dv_{50}$ of the graphite to a particle size $Dv_{90}$ of the graphite is in a range of from 0.5 to 0.75, where the $Dv_{50}$ represents a particle size at which a cumulative volume distribution percentage of the graphite reaches 50%, and the $Dv_{90}$ represents a particle size at which the cumulative volume distribution percentage of the graphite reaches 90%.

More preferably, the particle size $Dv_{50}$ of the graphite is $\leq 15 \mu m$, and the particle size $Dv_{90}$ of the graphite is $\leq 25 \mu m$.

The particle sizes $Dv_{50}$ and $Dv_{90}$ of the graphite can be obtained using a laser particle size analyzer.

The inventors have found through experiments that, in the electrolyte system described in the present disclosure, the graphite with different particle size distributions exhibits varying degrees of balance between the electrolyte wettability and its own conductivity. A particle size distribution falling within a reasonable range can prevent the detachment of some small particles during the charging and discharging process, thereby avoiding the influences on the conductivity and cycle performance of the secondary battery. Furthermore, the particle size distribution falling within a reasonable range can also improve the electrolyte wettability in the negative electrode plate. When the graphite having a particle size within the above-mentioned range is used as a negative electrode active material, the secondary battery can achieve a better usage performance.

In some embodiments, the positive electrode plate includes a positive electrode active material layer, and the positive electrode active material layer includes a compound with a chemical formula of $Li_aNi_xCo_yM_zO_2$, where M is at least one selected from the group consisting of Mn, Al, Zr, Ti, V, Mg, Fe, B, and Mo, $0.95 \leq a \leq 1.2$, $0.33 \leq x < 1$, $0 < y \leq 0.33$, $0 < z \leq 0.33$, and $x + y + z = 1$.

In the present disclosure, an electrical device is also provided. The electrical device adopts the aforementioned secondary battery as its power source. Since the aforementioned secondary battery has superior cycle performance and low gas production, the electrical device exhibits extended endurance and better safety performance.

The present disclosure is further illustrated below with specific embodiments. These embodiments should not be construed as a limitation of the protection scope of claims claimed in the present disclosure.

Example 1

A secondary battery was provided, and its preparation method included the following steps:

(1) $Li(Ni_{0.8}Mn_{0.1}Co_{0.1})O_2$ (NMC811) as a positive electrode active material, acetylene black (Super P) as a conductive agent, and polyvinylidene fluoride (PVDF) as a binder were evenly mixed at a mass ratio of 94:3:3 to obtain a mixture. The mixture was dispersed in 1-methyl-2-pyrrolidone (NMP) to form a uniform black slurry. The mixed slurry was coated on both sides of an aluminum foil. After baking, rolling and cutting, a positive electrode plate was obtained. A positive electrode active material layer of the positive electrode plate had a compaction density of 3.40 g/cm$^3$.

(2) Graphite (Gr, with a particle size $Dv_{50}$ of 12 $\mu m$ and a particle size $Dv_{90}$ of 20 $\mu m$) as a negative electrode active material, acetylene black (Super P) as a conductive agent, carboxymethyl cellulose (CMC) as a thickener, and styrene butadiene rubber (SBR) as a binder were evenly mixed at a mass ratio of 96.2: 1.2: 1.2: 1.4 (AG: Super P: CMC: SBR) to obtain a uniform mixture. The mixture was then dispersed in deionized water to form a uniform black slurry. The mixed slurry was coated on both sides of a copper foil. After baking, rolling and cutting, a negative electrode plate was obtained. A compaction density of the negative electrode plate was 1.5 g/cm$^3$ and an electrode resistivity of the negative electrode plate was defined as E, in $\Omega \cdot cm$.

(3) Preparation of an electrolyte:

(3.1) Ethylene carbonate (EC, a high-viscosity organic solvent), ethyl methyl carbonate (EMC, a low-viscosity organic solvent), and diethyl carbonate (DEC, a high-viscosity organic solvent) were mixed at a mass ratio of 30:40:30 to form a mixed solvent. The mixed solvent was further treated with a 4 Å molecular sieve to remove water for later use.

(3.2) At room temperature and in an argon-filled glove box, 12.5wt% lithium hexafluorophosphate relative to a total mass of the electrolyte was added to the mixed solvent obtained in the step (3.1) with continuous stirring and cooling, finally yielding a colorless and transparent liquid.

(3.3) 0.2 wt.% vinylene carbonate, 0.5 wt.% ethylene sulfate, and 0.5 wt.% lithium difluorophosphate, relative to the total mass of the electrolyte, were added to the colorless and transparent liquid, thereby obtaining the electrolyte.

(4) The prepared positive electrode plate, a separator (a polypropylene (PP) separator with a thickness of 14 μm), and the negative electrode plate were stacked in sequence, with the separator placed between the positive electrode plate and negative electrode plate. After winding, hot pressing and shaping, and tab welding, a bare battery cell was obtained. The bare battery cell was placed in an aluminum-plastic film outer packaging and baked in an oven at 85±10 °C for 24 hours. The electrolyte prepared above was injected into a dried battery, followed by standing, formation and capacity grading to complete the preparation of a lithium-ion pouch battery. An injection coefficient of the electrolyte was denoted as IC, in g/Ah.

Example 2

A secondary battery was provided in Example 2, and its preparation method differed from that of Example 1 only in the injection coefficient of the electrolyte.

Example 3

A secondary battery was provided in Example 3, and its preparation method differed from that of Example 1 only in the injection coefficient of the electrolyte.

Example 4

A secondary battery was provided in Example 4, and its preparation method differed from that of Example 2 only in the electrode resistivity of the negative electrode plate (A negative electrode plate with a different electrode resistivity can be obtained by adjusting rolling parameters during the preparation of the negative electrode plate.).

Example 5

A secondary battery was provided in Example 5, and its preparation method differed from that of Example 2 only in the electrode resistivity of the negative electrode plate.

Example 6

A secondary battery was provided in Example 6, and its preparation method differed from that of Example 2 only in the electrode resistivity of the negative electrode plate.

Example 7

A secondary battery was provided in Example 7, and its preparation method differed from that of Example 2 only in step (3.1), where the mixed solvent was prepared by mixing ethylene carbonate, ethyl methyl carbonate, dimethyl carbonate (DMC, a low-viscosity organic solvent) and diethyl carbonate at a mass ratio of 30:20:45:5.

Example 8

A secondary battery was provided in Example 8, and its preparation method differed from that of Example 2 only in step (3.1), where the mixed solvent was prepared by mixing ethylene carbonate, ethyl methyl carbonate and dimethyl carbonate at a mass ratio of 20:20:60.

Example 9

A secondary battery was provided in Example 9, and its preparation method differed from that of Example 2 only in step (3.1), where the mixed solvent was prepared by mixing ethylene carbonate, ethyl methyl carbonate, dimethyl carbonate, and ethyl acetate (EA, a low-viscosity organic solvent) at a mass ratio of 20:20:40:20.

Example 10

A secondary battery was provided in Example 10, and its preparation method differed from that of Example 7 only in step (3.3), where the addition amount of the vinylene carbonate was 0.1 wt.%.

Example 11

A secondary battery was provided in Example 11, and its preparation method differed from that of Example 7 only in step (3.3), where the addition amount of the vinylene carbonate was 0.5 wt.%.

Example 12

A secondary battery was provided in Example 12, and its preparation method differed from that of Example 7 only in step (3.3), where the addition amount of the vinylene carbonate was 1 wt.%.

Example 13

A secondary battery was provided in Example 13, and its preparation method differed from that of Example 7 only in step (3.3), where the vinylene carbonate was replaced with fluoroethylene carbonate with an addition amount of 0.2 wt.%.

Example 14

A secondary battery was provided in Example 14, and its preparation method differed from that of Example 7 only in step (3.3), where the addition amount of the ethylene sulfate was 1 wt.%.

Example 15

A secondary battery was provided in Example 15, and its preparation method differed from that of Example 7 only in step (3.3), where the addition amount of the ethylene sulfate was 1.5 wt.%.

Example 16

A secondary battery was provided in Example 16, and its preparation method differed from that of Example 7 only in step (3.3), where the addition amount of the ethylene sulfate was 3 wt.%.

Example 17

A secondary battery was provided in Example 17, and its preparation method differed from that of Example 7 only in step (3.3), where the ethylene sulfate was replaced with 1,3-propanesultone with an addition amount of 1.5 wt.%.

Example 18

A secondary battery was provided in Example 18, and its preparation method differed from that of Example 7 only in step (3.3), where the ethylene sulfate was replaced with propene-1,3-sultone with an addition amount of 1.5 wt.%.

Example 19

A secondary battery was provided in Example 19, and its preparation method differed from that of Example 7 only in step (3.3), where the ethylene sulfate was replaced with methylene methanedisulfonate with an addition amount of 1.5 wt.%.

Example 20

A secondary battery was provided in Example 20, and its preparation method differed from that of Example 15 only in step (3.3), where the lithium difluorophosphate was replaced with tris(trimethylsilyl)phosphate with an addition amount of 1 wt.%.

Example 21

A secondary battery was provided in Example 21, and its preparation method differed from that of Example 15 only in step (3.3), where 1wt.% tris(trimethylsilyl)phosphate was also added.

Example 22

A secondary battery was provided in Example 22, and its preparation method differed from that of Example 15 only in step (3.3), where 1 wt.% tris(trimethylsilyl)phosphate was also added, and the addition amount of the lithium difluorophosphate was 0.9 wt.%.

Example 23

A secondary battery was provided in Example 23, and its preparation method differed from that of Example 15 only in step (3.3), where the lithium difluorophosphate was replaced with lithium difluoro(oxalato) borate and 1 wt.% tris(trimethylsilyl)phosphate was further added.

Examples 24-29

A secondary battery was provided in each of Examples 24-29, and their preparation methods each differed from that of Example 7 only in step (3.3), where the respective addition amounts of the vinylene carbonate and the ethylene sulfate were different.

Example 30

A secondary battery was provided in Example 30, and its preparation method differed from that of Example 1 only in that the negative electrode active material, graphite, had a particle size $D_{50}$ of 13 $\mu$m and a particle size $D_{90}$ of 18 $\mu$m.

Example 31

A secondary battery was provided in Example 31, and its preparation method differed from that of Example 1 only in that the negative electrode active material, graphite, had a particle size $D_{50}$ of 12 $\mu$m and a particle size $D_{90}$ of 25 $\mu$m.

Example 32

A secondary battery was provided in Example 32, and its preparation method differed from that of Example 1 only in that the negative electrode active material, graphite, had a particle size $D_{50}$ of 14 $\mu$m and a particle size $D_{90}$ of 18 $\mu$m.

Example 33

A secondary battery was provided in Example 33, and its preparation method differed from that of Example 1 only in that the addition amounts of the ethylene sulfate and the lithium difluorophosphate were respectively adjusted to 0.1 wt.%.

Comparative Example 1

A secondary battery was provided in Comparative Example 1, and its preparation method differed from that of Example 1 only in the injection coefficient of the electrolyte.

Comparative Example 2

A secondary battery was provided in Comparative Example 2, and its preparation method differed from that of Example 1 in that: (a) in step (3.1), the mixed solvent was prepared by mixing ethylene carbonate and ethyl methyl carbonate at a mass ratio of 30:70, and (b) the injection coefficient of the electrolyte was different.

Comparative Example 3

A secondary battery was provided in Comparative Example 3, and its preparation method differed from that of Example 1 only in the electrode resistivity of the negative electrode plate (A negative electrode plate with a different electrode resistivity can be obtained by adjusting rolling parameters during the preparation of the negative electrode plate.).

Comparative Example 4

A secondary battery was provided in Comparative Example 4, and its preparation method differed from that of Example 1 in that: (a) in step (3.1), the mixed solvent was prepared by mixing ethylene carbonate and ethyl methyl carbonate at a mass ratio of 30:70; and (b) the injection coefficient of the electrolyte and the electrode resistivity of the negative electrode plate were different.

Comparative Example 5

A secondary battery was provided in Comparative Example 5, and its preparation method differed from that of Example 1 in step (3.1), where the mixed solvent was prepared by mixing ethylene carbonate, ethyl methyl carbonate and diethyl carbonate at a mass ratio of 30:10:60.

Comparative Example 6

A secondary battery was provided in Comparative Example 6, and its preparation method differed from that of Example 1 in that: (a) in step (3.1), the mixed solvent was prepared by mixing ethylene carbonate and ethyl methyl carbonate at a mass ratio of 15:85, and (b) the injection coefficient of the electrolyte was 2.5 g/Ah.

Comparative Example 7

A secondary battery was provided in Comparative Example 7, and its preparation method differed from that of Example 1 in that the ethylene carbonate was not added in step (3.3).

Comparative Example 8

A secondary battery was provided in Comparative Example 8, and its preparation method differed from that of Example 1 in that the ethylene sulfate was not added in step (3.3).

Comparative Example 9

A secondary battery was provided in Comparative Example 9, and its preparation method differed from that of Example 1 in that the lithium difluorophosphate was not added in step (3.3).

Comparative Example 10

A secondary battery was provided in Comparative Example 10, and its preparation method differed from that of Example 1 in that: (a) the injection coefficient of the electrolyte and the electrode resistivity of the negative electrode plate were different; (b) in step (3.1), the mixed solvent was prepared by mixing ethylene carbonate, ethyl methyl carbonate and dimethyl carbonate at a mass ratio of 20:20:60; (c) in step (3.3), 1 wt.% fluoroethylene carbonate, 3 wt.% ethylene sulfate, 1 wt.% tris(trimethylsilyl)phosphate and 0.9 wt.% lithium difluorophosphate, relative to the total mass of the electrolyte, were added to the colorless and transparent liquid to obtain the electrolyte.

Performances of the secondary batteries prepared in the above examples and comparative examples were tested using the following methods:

(1) Direct current resistance (DCR) test at -20 °C: At 25±2 °C, the secondary batteries obtained from the various examples and comparative examples were each charged to 4.25 V at 1C, and then discharged at 1C for 30 minutes to reach a 50% state of charge (SOC). Then, the temperature was adjusted to -20 °C, and the secondary batteries were discharged at 0.36C for 10 seconds. A discharge DCR at -20 °C was calculated according to the following formula: DCR = (Voltage difference before and after discharge / Discharge current)×100%.

Room-temperature cycle performance test: At 25±2 °C, the secondary batteries obtained from the various examples and comparative examples were each subjected to a charge-discharge cycle test within a voltage range of 2.5-4.25V at a charge/discharge rate of 4C/1C. When a capacity retention rate of a battery reached 80%, the number of cycles was recorded. The capacity retention rate was calculated according to the following formula: Capacity retention rate (%) = (Discharge specific capacity at the final cycle / Discharge specific capacity at the first cycle)×100%.

(3) Battery Lithium Plating Test Method: The temperature was adjusted to -10 °C, and the secondary batteries obtained from the various examples and comparative examples were each charged to an upper voltage limit with a charging current of 0.13C, then discharged to a lower voltage limit with a discharging current of 1C. After 10 charge-discharge cycles, the temperature was further adjusted to 25 °C. Then, these secondary batteries were each recharged to the upper voltage limit with a charging current of 1C and disassembled. A negative electrode plate surface of each battery was observed to determine whether lithium plating occurred at the interface. When a coverage of a lithium-plated region on a surface of the negative electrode plate in a secondary battery was less than 2%, the secondary battery was considered as "no lithium plating"; when the coverage of the lithium-plated region on the surface of the negative electrode plate was greater than or equal to 2% and less than 5%, the secondary battery was considered as "minor lithium plating"; when the coverage of the lithium-plated region on the surface of the negative electrode plate was in a range of from 5% to 50%, the secondary battery was considered as "moderate lithium plating"; when the coverage of the lithium-plated region on the surface of the negative electrode plate was greater than 50%, the secondary battery was considered as "severe lithium plating".

(4) Gas Generation Test during High-temperature Storage: At 25 + 2 °C, the pouch batteries obtained in the above examples and comparative examples were each charged to 4.25V at a constant current of 1C, then charged at a constant voltage of 4.25V until the current was below 0.05C, so that they were in a fully charged state at 4.25V. A volume of a fully charged battery before storage was measured and recorded as $V_0$. The fully charged battery was then placed in an oven at 60±2 °C. After 150 days, the battery was taken out, and its volume after storage was immediately measured and recorded as $V_1$. A volume expansion rate (%) was calculated according to the following formula: Volume expansion rate (%) = $(V_1 - V_0)/V_0 \times 100\%$.

Test results for Examples 1-33 (E1-E33) and Comparative Examples 1-10 (CE1-CE10) were shown in Tables 1-3, where $0.75 \leq X = \dfrac{IC \times R + e^{\gamma}}{d \times E + 10^{\alpha+\beta}} \leq 1.2$.

Table 1

| Item | High-viscosity organic solvent | Low-viscosity organic solvent | Mass ratio of organic solvents with different viscosities | First additive | Second additive | Third additive | Particle size $D_{50}$ of negative electrode active material, $\mu$m | Particle size $D_{90}$ of negative electrode active material, $\mu$m |
|---|---|---|---|---|---|---|---|---|
| E1 | EC, DEC | EMC | EC:EMC:DEC=3 0:40:30 | Vinylene carbonate | Ethylene sulfate | Lithium difluorophosphate | 12 | 20 |
| E2 | EC, DEC | EMC | EC:EMC:DEC=30:40:30 | Vinylene carbonate | Ethylene sulfate | Lithium difluorophosphate | 12 | 20 |
| E3 | EC, DEC | EMC | EC:EMC:DEC=3 0:40:30 | Vinylene carbonate | Ethylene sulfate | Lithium difluorophosphate | 12 | 20 |
| E4 | EC, DEC | EMC | EC:EMC:DEC=3 0:40:30 | Vinylene carbonate | Ethylene sulfate | Lithium difluorophosphate | 12 | 20 |
| E5 | EC, DEC | EMC | EC:EMC:DEC=3 0:40:30 | Vinylene carbonate | Ethylene sulfate | Lithium difluorophosphate | 12 | 20 |
| E6 | EC, DEC | EMC | EC:EMC:DEC=3 0:40:30 | Vinylene carbonate | Ethylene sulfate | Lithium difluorophosphate | 12 | 20 |
| E7 | EC, DEC | EMC, DMC | EC:EMC:DMC:D EC=30:20:45:5 | Vinylene carbonate | Ethylene sulfate | Lithium difluorophosphate | 12 | 20 |
| E8 | EC | EMC, DMC | EC:EMC:DMC=2 0:20:60 | Vinylene carbonate | Ethylene sulfate | Lithium difluorophosphate | 12 | 20 |
| E9 | EC | EMC, DMC, EA | EC:EMC:DMC:E A=20:20:40:20 | Vinylene carbonate | Ethylene sulfate | Lithium difluorophosphate | 12 | 20 |
| E10 | EC, DEC | EMC, DMC | EC:EMC:DMC:D EC=30:20:45:5 | Vinylene carbonate | Ethylene sulfate | Lithium difluorophosphate | 12 | 20 |
| E11 | EC, DEC | EMC, DMC | EC:EMC:DMC:D EC=30:20:45:5 | Vinylene carbonate | Ethylene sulfate | Lithium difluorophosphate | 12 | 20 |
| E12 | EC, DEC | EMC, DMC | EC:EMC:DMC:D EC=30:20:45:5 | Vinylene carbonate | Ethylene sulfate | Lithium difluorophosphate | 12 | 20 |
| E13 | EC, DEC | EMC, DMC | EC:EMC:DMC:D EC=30:20:45:5 | Fluoroethylene carbonate | Ethylene sulfate | Lithium difluorophosphate | 12 | 20 |

| Item | High-viscos ity organic solvent | Low-vis cosity organic solvent | Mass ratio of organic solvents with different viscosities | First additive | Second additive | Third additive | Particle size $D_{50}$ of negative electrode active material, $\mu$m | Particle size $D_{90}$ of negative electrode active material, $\mu$m |
|---|---|---|---|---|---|---|---|---|
| E14 | EC, DEC | EMC, DMC | EC:EMC:DMC:DEC=30:20:45:5 | Vinylene carbonate | Ethylene sulfate | Lithium difluorophosphate | 12 | 20 |
| E15 | EC, DEC | EMC, DMC | EC:EMC:DMC:DEC=30:20:45:5 | Vinylene carbonate | Ethylene sulfate | Lithium difluorophosphate | 12 | 20 |
| E16 | EC, DEC | EMC, DMC | EC:EMC:DMC:DEC=30:20:45:5 | Vinylene carbonate | Ethylene sulfate | Lithium difluorophosphate | 12 | 20 |
| E17 | EC, DEC | EMC, DMC | EC:EMC:DMC:DEC=30:20:45:5 | Vinylene carbonate | 1,3-Propa nesultone | Lithium difluorophosphate | 12 | 20 |
| E18 | EC, DEC | EMC, DMC | EC:EMC:DMC:DEC=30:20:45:5 | Vinylene carbonate | Propene-1 ,3-sultone | Lithium difluorophosphate | 12 | 20 |
| E19 | EC, DEC | EMC, DMC | EC:EMC:DMC:DEC=30:20:45:5 | Vinylene carbonate | Methylene methanedi sulfonate | Lithium difluorophosphate | 12 | 20 |
| E20 | EC, DEC | EMC, DMC | EC:EMC:DMC:DEC=30:20:45:5 | Vinylene carbonate | Ethylene sulfate | Tris(trimethylsilyl) phosphate | 12 | 20 |
| E21 | EC, DEC | EMC, DMC | EC:EMC:DMC:DEC=30:20:45:5 | Vinylene carbonate | Ethylene sulfate | Lithium difluoropho-sphate, Tris(trimethylsi-lyl) phosphate | 12 | 20 |
| E22 | EC, DEC | EMC, DMC | EC:EMC:DMC:DEC=30:20:45:5 | Vinylene carbonate | Ethylene sulfate | Lithium difluoropho-sphate, Tris(trimethylsi-lyl) phosphate | 12 | 20 |
| E23 | EC, DEC | EMC, DMC | EC:EMC:DMC:DEC=30:20:45:5 | Vinylene carbonate | Ethylene sulfate | Lithium difluoro(oxalato) borat e, Tris(trimethylsilyl) phosphate | 12 | 20 |
| E24 | EC, DEC | EMC, DMC | EC:EMC:DMC:DEC=30:20:45:5 | Vinylene carbonate | Ethylene sulfate | Lithium difluorophosphate | 12 | 20 |
| E25 | EC, DEC | EMC, DMC | EC:EMC:DMC:DEC=30:20:45:5 | Vinylene carbonate | Ethylene sulfate | Lithium difluoropho-sphate | 12 | 20 |

(continued)

| Item | High-viscosity organic solvent | Low-viscosity organic solvent | Mass ratio of organic solvents with different viscosities | First additive | Second additive | Third additive | Particle size $D_{50}$ of negative electrode active material, μm | Particle size $D_{90}$ of negative electrode active material, μm |
|---|---|---|---|---|---|---|---|---|
| E26 | EC, DEC | EMC, DMC | EC:EMC:DMC:DEC=30:20:45:5 | Vinylene carbonate | Ethylene sulfate | Lithium difluorophosphate | 12 | 20 |
| E27 | EC, DEC | EMC, DMC | EC:EMC:DMC:DEC=30:20:45:5 | Vinylene carbonate | Ethylene sulfate | Lithium difluorophosphate | 12 | 20 |
| E28 | EC, DEC | EMC, DMC | EC:EMC:DMC:DEC=30:20:45:5 | Vinylene carbonate | Ethylene sulfate | Lithium difluorophosphate | 12 | 20 |
| E29 | EC, DEC | EMC, DMC | EC:EMC:DMC:DEC=30:20:45:5 | Vinylene carbonate | Ethylene sulfate | Lithium difluorophosphate | 12 | 20 |
| E30 | EC, DEC | EMC | EC:EMC:DEC=30:40:30 | Vinylene carbonate | Ethylene sulfate | Lithium difluorophosphate | 13 | 18 |
| E31 | EC, DEC | EMC | EC:EMC:DEC=30:40:30 | Vinylene carbonate | Ethylene sulfate | Lithium difluorophosphate | 12 | 25 |
| E32 | EC, DEC | EMC | EC:EMC:DEC=30:40:30 | Vinylene carbonate | Ethylene sulfate | Lithium difluorophosphate | 14 | 18 |
| E33 | EC, DEC | EMC | EC:EMC:DEC=30:40:30 | Vinylene carbonate | Ethylene sulfate | Lithium difluorophosphate | 12 | 20 |
| CEI | EC, DEC | EMC | EC:EMC:DEC=30:40:30 | Vinylene carbonate | Ethylene sulfate | Lithium difluorophosphate | 12 | 20 |
| CE2 | EC | EMC | EC:EMC =30:70 | Vinylene carbonate | Ethylene sulfate | Lithium difluorophosphate | 12 | 20 |
| CE3 | EC, DEC | EMC | EC:EMC:DEC=30:40:30 | Vinylene carbonate | Ethylene sulfate | Lithium difluorophosphate | 12 | 20 |
| CE4 | EC | EMC | EC:EMC =30:70 | Vinylene carbonate | Ethylene sulfate | Lithium difluorophosphate | 12 | 20 |
| CE5 | EC, DEC | EMC | EC:EMC:DEC=30:10:60 | Vinylene carbonate | Ethylene sulfate | Lithium difluorophosphate | 12 | 20 |
| CE6 | EC | EMC | EC:EMC =15:85 | Vinylene carbonate | Ethylene sulfate | Lithium difluorophosphate | 12 | 20 |

(continued)

| Item | High-viscosity organic solvent | Low-viscosity organic solvent | Mass ratio of organic solvents with different viscosities | First additive | Second additive | Third additive | Particle size $D_{50}$ of negative electrode active material, μm | Particle size $D_{90}$ of negative electrode active material, μm |
|---|---|---|---|---|---|---|---|---|
| CE7 | EC, DEC | EMC | EC:EMC:DEC=3 0:40:30 | / | Ethylene sulfate | Lithium difluorophosphate | 12 | 20 |
| CE8 | EC, DEC | EMC | EC:EMC:DEC=3 0:40:30 | Vinylene carbonate | / | Lithium difluorophosphate | 12 | 20 |
| CE9 | EC, DEC | EMC | EC:EMC:DEC=3 0:40:30 | Vinylene carbonate | Ethylene sulfate | / | 12 | 20 |
| CE10 | EC | EMC, DMC | EC:EMC:DMC=2 0:20:60 | Fluoroethylene carbonate | Ethylene sulfate | Lithium difluorophosphate, Tris(trimethylsilyl) phosphate | 12 | 20 |

Table 2

| Item | IC, g/Ah | E, $\Omega \cdot$cm | R | $\alpha$ | $\beta$ | $\gamma$ | X |
|---|---|---|---|---|---|---|---|
| Example 1 | 2.3 | 0.224 | 0.4 | 0.2% | 0.5% | 0.5% | 0.76 |
| Example 2 | 2.5 | 0.224 | 0.4 | 0.2% | 0.5% | 0.5% | 0.80 |
| Example 3 | 2.8 | 0.224 | 0.4 | 0.2% | 0.5% | 0.5% | 0.84 |
| Example 4 | 2.5 | 0.210 | 0.4 | 0.2% | 0.5% | 0.5% | 0.83 |
| Example 5 | 2.5 | 0.239 | 0.4 | 0.2% | 0.5% | 0.5% | 0.77 |
| Example 6 | 2.5 | 0.246 | 0.4 | 0.2% | 0.5% | 0.5% | 0.75 |
| Example 7 | 2.5 | 0.224 | 0.65 | 0.2% | 0.5% | 0.5% | 1.04 |
| Example 8 | 2.5 | 0.224 | 0.8 | 0.2% | 0.5% | 0.5% | 1.19 |
| Example 9 | 2.5 | 0.224 | 0.8 | 0.2% | 0.5% | 0.5% | 1.19 |
| Example 10 | 2.5 | 0.224 | 0.65 | 0.1% | 0.5% | 0.5% | 1.05 |
| Example 11 | 2.5 | 0.224 | 0.65 | 0.5% | 0.5% | 0.5% | 1.04 |
| Example 12 | 2.5 | 0.224 | 0.65 | 1% | 0.5% | 0.5% | 1.04 |
| Example 13 | 2.5 | 0.224 | 0.65 | 0.2% | 0.5% | 0.5% | 1.04 |
| Example 14 | 2.5 | 0.224 | 0.65 | 0.2% | 1% | 0.5% | 1.04 |
| Example 15 | 2.5 | 0.224 | 0.65 | 0.2% | 1.5% | 0.5% | 1.04 |
| Example 16 | 2.5 | 0.224 | 0.65 | 0.2% | 3% | 0.5% | 1.02 |
| Example 17 | 2.5 | 0.224 | 0.65 | 0.2% | 1.5% | 0.5% | 1.04 |
| Example 18 | 2.5 | 0.224 | 0.65 | 0.2% | 1.5% | 0.5% | 1.04 |
| Example 19 | 2.5 | 0.224 | 0.65 | 0.2% | 1.5% | 0.5% | 1.04 |
| Example 20 | 2.5 | 0.224 | 0.65 | 0.2% | 1.5% | 1% | 1.04 |
| Example 21 | 2.5 | 0.224 | 0.65 | 0.2% | 1.5% | 1.5% | 1.04 |
| Example 22 | 2.5 | 0.224 | 0.65 | 0.2% | 1.5% | 1.9% | 1.04 |
| Example 23 | 2.5 | 0.224 | 0.65 | 0.2% | 1.5% | 1.5% | 1.04 |
| Example 24 | 2.5 | 0.224 | 0.65 | 0.5% | 1% | 0.5% | 1.04 |
| Example 25 | 2.5 | 0.224 | 0.65 | 0.5% | 1.5% | 0.5% | 1.03 |
| Example 26 | 2.5 | 0.224 | 0.65 | 0.5% | 3% | 0.5% | 1.02 |
| Example 27 | 2.5 | 0.224 | 0.65 | 0.3% | 1.2% | 0.5% | 1.03 |
| Example 28 | 2.5 | 0.224 | 0.65 | 0.1% | 1.4% | 0.5% | 1.03 |
| Example 29 | 2.5 | 0.224 | 0.65 | 0.7% | 0.8% | 0.5% | 1.04 |
| Example 30 | 2.3 | 0.224 | 0.4 | 0.2% | 0.5% | 0.5% | 0.76 |
| Example 31 | 2.3 | 0.224 | 0.4 | 0.2% | 0.5% | 0.5% | 0.76 |
| Example 32 | 2.3 | 0.224 | 0.4 | 0.2% | 0.5% | 0.5% | 0.76 |
| Example 33 | 2.3 | 0.224 | 0.4 | 0.2% | 0.1% | 0.1% | 0.77 |
| Comparative Example 1 | 1.8 | 0.224 | 0.4 | 0.2% | 0.5% | 0.5% | 0.69 |
| Comparative Example 2 | 3.0 | 0.224 | 0.7 | 0.2% | 0.5% | 0.5% | 1.23 |
| Comparative Example 3 | 2.3 | 0.261 | 0.4 | 0.2% | 0.5% | 0.5% | 0.70 |
| Comparative Example 4 | 2.6 | 0.194 | 0.7 | 0.2% | 0.5% | 0.5% | 1.22 |
| Comparative Example 5 | 2.3 | 0.224 | 0.1 | 0.2% | 0.5% | 0.5% | 0.49 |
| Comparative Example 6 | 2.5 | 0.224 | 0.85 | 0.2% | 0.5% | 0.5% | 1.24 |

(continued)

| Item | IC, g/Ah | E, Ω·cm | R | α | β | γ | X |
|---|---|---|---|---|---|---|---|
| Comparative Example 7 | 2.3 | 0.224 | 0.4 | 0 | 0.5% | 0.5% | 0.77 |
| Comparative Example 8 | 2.3 | 0.224 | 0.4 | 0.2% | 0 | 0.5% | 0.77 |
| Comparative Example 9 | 2.3 | 0.224 | 0.4 | 0.2% | 0.5% | 0 | 0.76 |
| Comparative Example 10 | 2.8 | 0.214 | 0.8 | 1% | 3% | 1.9% | 1.29 |

Table 3

| Product | DCR at -20 °C, Ω | Degree of lithium plating on the negative electrode surface | Cycling life (number of cycles) at 4C/1C rates and 25 °C | Volume expansion rate after 150 days of storage at 60 °C, % |
|---|---|---|---|---|
| Example 1 | 361 | Minor lithium plating | 1021 | 29 |
| Example 2 | 324 | No lithium plating | 1120 | 33 |
| Example 3 | 301 | No lithium plating | 1350 | 35 |
| Example 4 | 292 | No lithium plating | 1352 | 28 |
| Example 5 | 356 | No lithium plating | 1054 | 27 |
| Example 6 | 384 | No lithium plating | 915 | 30 |
| Example 7 | 295 | No lithium plating | 1258 | 37 |
| Example 8 | 264 | No lithium plating | 1396 | 43 |
| Example 9 | 241 | No lithium plating | 1250 | 45 |
| Example 10 | 273 | No lithium plating | 1015 | 32 |
| Example 11 | 306 | No lithium plating | 1345 | 37 |
| Example 12 | 342 | Minor lithium plating | 1218 | 45 |
| Example 13 | 304 | No lithium plating | 1314 | 49 |
| Example 14 | 324 | No lithium plating | 1215 | 32 |
| Example 15 | 359 | No lithium plating | 1008 | 26 |
| Example 16 | 374 | Minor lithium plating | 951 | 18 |
| Example 17 | 345 | No lithium plating | 1014 | 27 |
| Example 18 | 339 | No lithium plating | 984 | 25 |
| Example 19 | 348 | No lithium plating | 963 | 24 |
| Example 20 | 312 | No lithium plating | 1140 | 27 |
| Example 21 | 274 | No lithium plating | 1198 | 21 |
| Example 22 | 244 | No lithium plating | 1004 | 23 |
| Example 23 | 283 | No lithium plating | 1145 | 24 |
| Example 24 | 333 | No lithium plating | 1197 | 39 |
| Example 25 | 364 | No lithium plating | 978 | 27 |
| Example 26 | 385 | No lithium plating | 924 | 15 |
| Example 27 | 315 | No lithium plating | 1146 | 36 |
| Example 28 | 354 | No lithium plating | 1024 | 38 |
| Example 29 | 369 | No lithium plating | 1010 | 39 |
| Example 30 | 358 | Minor lithium plating | 1066 | 30 |

(continued)

| Product | DCR at -20 °C, Ω | Degree of lithium plating on the negative electrode surface | Cycling life (number of cycles) at 4C/1C rates and 25 °C | Volume expansion rate after 150 days of storage at 60 °C, % |
|---|---|---|---|---|
| Example 31 | 387 | Minor lithium plating | 968 | 35 |
| Example 32 | 333 | Minor lithium plating | 980 | 31 |
| Example 33 | 367 | Minor lithium plating | 1011 | 32 |
| Comparative Example 1 | 462 | Severe lithium plating | 795 | 56 |
| Comparative Example 2 | 304 | No lithium plating | 825 | 66 |
| Comparative Example 3 | 397 | Severe lithium plating | 835 | 50 |
| Comparative Example 4 | 425 | Moderate lithium plating | 864 | 43 |
| Comparative Example 5 | 391 | Severe lithium plating | 782 | 36 |
| Comparative Example 6 | 374 | No lithium plating | 613 | 65 |
| Comparative Example 7 | 324 | No lithium plating | 752 | 27 |
| Comparative Example 8 | 309 | No lithium plating | 864 | 96 |
| Comparative Example 9 | 452 | Severe lithium plating | 831 | 27 |
| Comparative Example 10 | 325 | No lithium plating | 967 | 82 |

It can be seen from Table 2 that:

(1) When the secondary batteries satisfy the range requirement of X, they exhibit ideal electrochemical performance. Specifically, the DC resistance (DCR) of the secondary batteries at low temperatures remains below 400Ω, while their cycle life at room temperature exceeds 900 cycles. On the other hand, these secondary batteries also demonstrate high stability and safety, with effectively suppressed lithium plating on the negative electrode surface and a volume expansion rate at high temperatures not exceeding 50%.

(2) As shown by the data from Examples 1-33 and Comparative Example 3, the negative electrode is closely associated with the electrolyte. When an electrode resistivity of a negative electrode is within a suitable range, interfacial impedance of a secondary battery is low, which can suppress lithium plating on the negative electrode. Moreover, when the electrode resistivity of the negative electrode plate is within the suitable range, the contact between the negative electrode active material particles, as well as the contact between the active particles and the binder, in the negative electrode plate is more effective. This results in better conduction efficiency for ions and electrons, which is beneficial for enhancing the cycle life of the secondary battery.

(3) As can be seen from the performance of the secondary batteries prepared in Examples 1-33 and Comparative Examples 5-6, a viscosity of a solvent in an electrolyte has a significant impact on a secondary battery. When the viscosity of the solvent is within a suitable range, the wettability of the electrolyte can be improved and the lithium-ion transport efficiency can be enhanced, thereby improving the conductivity, cycle performance and safety.

(4) As can be seen from the secondary batteries of Examples 1-33 and Comparative Examples 7-9, when the three additives are present in the electrolyte of the present disclosure simultaneously, the secondary battery can achieve a balance between the fast-charging cycle life and the safety performance.

(5) As can be seen from Examples 1-33 and Comparative Example 10, the secondary battery of the present disclosure is constructed based on an overall component relationship. Even if a single parameter of an individual component falls within the specified range, failure to consider the interrelations among the components after combination may still result in a secondary battery that fails to meet the performance standards.

(6) The first additive ensuring the fast-charging performance and the second additive ensuring the safety performance, when maintained at a specific ratio, enable the secondary battery to achieve a superior overall performance. As can be seen from Examples 7, 10-12 and 14-16, addition amounts of these two additives directly affect the two performances of a secondary battery. Therefore, when the addition amounts of these two additives are 0.2-0.5 wt.% and 1-1.5 wt.%, respectively, the secondary battery can achieve a better performance. Furthermore, as can be seen from a comparison between Examples 24 and 27-29, even when a total amount of the two additives is constant, maintaining their ratio within a range of from 0.25 to 0.5 can still ensure an excellent performance of a secondary battery.

(7) When graphite is used as an active material in the negative electrode plate of a secondary battery, in addition to an electrode resistivity, if a type of graphite with a ratio of the particle size $D_{v50}$ to the particle size $D_{v90}$ within a range of 0.5-0.75 is selected, this graphite can better maintain the balance between the electrolyte wettability and the electronic conductivity. As shown in Examples 1 and 30-32, the secondary batteries of Examples 1 and 30, which utilize graphite within this preferred ratio range, have better performance.

**Claims**

1. A secondary battery, comprising a positive electrode plate, a negative electrode plate, a separator, and an electrolyte; wherein the electrolyte comprises a solvent and an additive; the additive comprises a first additive, a second additive, and a third additive; the solvent comprises a low-viscosity organic solvent and a high-viscosity organic solvent, a viscosity of the low-viscosity organic solvent is $\leq 0.7$ mPa·s, and a viscosity of the high-viscosity organic solvent is $> 0.7$ mPa·s;

   the secondary battery satisfies a relationship as follows:

   $$0.75 \leq \frac{IC \times R + e^{\gamma}}{d \times E + 10^{\alpha+\beta}} \leq 1.20$$

   .

   wherein IC, in g/Ah, represents an injection coefficient of the electrolyte;
   E, in $\Omega$·cm, represents an electrode resistivity of the negative electrode plate, d=6.70;
   R represents a mass ratio of the low-viscosity organic solvent to a total solvent in the electrolyte;
   $\alpha$ represents a mass percentage of the first additive in the electrolyte;
   $\beta$ represents a mass percentage of the second additive in the electrolyte
   $\gamma$ represents a mass percentage of the third additive in the electrolyte; and
   the first additive comprises a carbonate compound; the second additive comprises a sulfur-containing compound; the third additive comprises a phosphorus-containing compound and/or a boron containing compound.

2. The secondary battery according to claim 1, wherein the secondary battery satisfies at least one selected from the group consisting of following conditions:

   (1)

   $$2.30 \leq IC \leq 2.80;$$

   (2)

   $$0.210 \leq E \leq 0.253;$$

   (3)

   $$0.40 \leq R \leq 0.80;$$

   (4)

   $$0.1\% \leq \alpha \leq 1.0\%;$$

   (5)

   $$0.1\% \leq \beta \leq 3.0\%;$$

   and
   (6)

$$0.1\% \leq \gamma \leq 2\%.$$

3. The secondary battery according to claim 1, wherein the low-viscosity organic solvent comprises at least one selected from the group consisting of dimethyl carbonate, ethyl methyl carbonate, methyl acetate, methyl propionate, methyl butyrate, methyl acetate, ethyl acetate, propyl acetate, ethyl butyrate and propyl propionate.

4. The secondary battery according to claim 1, wherein the high-viscosity organic solvent comprises at least one selected from the group consisting of ethylene carbonate, propylene carbonate, butylene carbonate, diethyl carbonate, methyl propyl carbonate, diphenyl carbonate and $\gamma$-butyrolactone.

5. The secondary battery according to any one of claims 1-4, wherein the secondary battery satisfies a condition as follows: the carbonate compound comprises at least one selected from the group consisting of vinylene carbonate, vinyl ethylene carbonate, and fluoroethylene carbonate.

6. The secondary battery according to any one of claims 1-4, wherein the secondary battery satisfies a condition as follows: the sulfur-containing compound comprises at least one selected from the group consisting of ethylene sulfate, 1,3-propanesultone, propene-1,3-sultone, ethylene sulfite, methylene methanedisulfonate, and 1,4-butanesultone.

7. The secondary battery according to any one of claims 1-4, wherein the secondary battery satisfies a condition as follows: the phosphorus-containing compound comprises at least one selected from the group consisting of tris(trimethylsilyl)phosphate and lithium difluorophosphate.

8. The secondary battery according to any one of claims 1-4, wherein the secondary battery satisfies a condition as follows: the boron-containing compound comprises lithium difluoro(oxalato)borate.

9. The secondary battery according to any one of claims 1-4, wherein the high-viscosity organic solvent comprises at least one selected from the group consisting of ethylene carbonate, propylene carbonate, and diethyl carbonate, and the low-viscosity organic solvent comprises ethyl methyl carbonate and/or ethyl acetate.

10. The secondary battery according to any one of claims 1-4, wherein a ratio of the $\alpha$ to the $\beta$ is in a range of from 0.25 to 0.5.

11. The secondary battery according to any one of claims 1-4, wherein the negative electrode plate comprises a negative electrode active material, and the negative electrode active material comprises graphite, a ratio of a particle size $D_{v50}$ of the graphite to a particle size $D_{v90}$ of the graphite is in a range of from 0.5 to 0.75, wherein the $D_{v50}$ represents a particle size at which a cumulative volume distribution percentage of the graphite reaches 50%, and the $D_{v90}$ represents a particle size at which the cumulative volume distribution percentage of the graphite reaches 90%.

12. The secondary battery according to claim 11, wherein the particle size $D_{v50}$ of the graphite is $\leq 15\mu m$, and the particle size $D_{v90}$ of the graphite is $\leq 25\mu m$.

13. An electrical device, comprising the secondary battery according to any one of claims 1-12, and the secondary battery serves as a power supply for the electrical device.

## INTERNATIONAL SEARCH REPORT

| International application No. |
| --- |
| **PCT/CN2024/093270** |

### A.  CLASSIFICATION OF SUBJECT MATTER

H01M 10/0525(2010.01)i;  H01M10/0569(2010.01)i;  H01M10/0567(2010.01)i;  H01M10/42(2006.01)i

According to International Patent Classification (IPC) or to both national classification and IPC

### B.  FIELDS SEARCHED

Minimum documentation searched (classification system followed by classification symbols)

IPC: H01M10

Documentation searched other than minimum documentation to the extent that such documents are included in the fields searched

Electronic data base consulted during the international search (name of data base and, where practicable, search terms used)

VEN, CNABS, CNTXT, ENTXTC, DWPI, CNKI: 二次电池, 正极, 负极, 极片, 隔膜, 电解液, 溶剂, 添加剂, 碳酸酯, 硫, 磷, 硼, 石墨, DV50, DV90, Secondary+ w +battery+, positive+ w +electrode+, negative+ w +electrode+, pole+ w piece+, separator +, electrolyte+, solvent+, additive+, carbonat+, sulfur+, phosphorus+, boron+, graphite+

### C.  DOCUMENTS CONSIDERED TO BE RELEVANT

| Category* | Citation of document, with indication, where appropriate, of the relevant passages | Relevant to claim No. |
| --- | --- | --- |
| PX | CN 117613356 A (SUNWODA POWER TECHNOLOGY CO., LTD.) 27 February 2024 (2024-02-27)<br>entire document | 1-13 |
| A | CN 115548445 A (SUNWODA ELECTRIC VEHICLE BATTERY CO., LTD.) 30 December 2022 (2022-12-30)<br>description, paragraphs 4-164 | 1-13 |
| A | CN 114207873 A (NINGDE AMPEREX TECHNOLOGY LTD.) 18 March 2022 (2022-03-18)<br>description, paragraphs [0004]-[0058] | 1-13 |
| A | CN 116936738 A (SUNWODA POWER TECHNOLOGY CO., LTD.) 24 October 2023 (2023-10-24)<br>description, paragraphs 4-118 | 1-13 |
| A | CN 116936931 A (SUNWODA POWER TECHNOLOGY CO., LTD.) 24 October 2023 (2023-10-24)<br>description, paragraphs 4-90 | 1-13 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **18 July 2024** | **24 July 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2024/093270** |

| C. | DOCUMENTS CONSIDERED TO BE RELEVANT | |
|---|---|---|
| Category* | Citation of document, with indication, where appropriate, of the relevant passages | Relevant to claim No. |
| A | CN 117059899 A (SUNWODA POWER TECHNOLOGY CO., LTD.) 14 November 2023 (2023-11-14) description, paragraphs 6-132 | 1-13 |
| A | US 2022123366 A1 (CONTEMPORARY AMPEREX TECIINOLOGY CO., LTD.) 21 April 2022 (2022-04-21) description, paragraphs 27-175 | 1-13 |
| A | WO 2021110165 A1 (GUANGZHOU TINCI MATERIALS TECHNOLOGY CO., LTD.) 10 June 2021 (2021-06-10) description, paragraphs 11-93 | 1-13 |

Form PCT/ISA/210 (second sheet) (July 2022)

| Patent document cited in search report | | | Publication date (day/month/year) | Patent family member(s) | | | Publication date (day/month/year) |
|---|---|---|---|---|---|---|---|
| CN | 117613356 | A | 27 February 2024 | | None | | |
| CN | 115548445 | A | 30 December 2022 | CN | 115548445 | B | 06 June 2023 |
| | | | | WO | 2024077765 | A1 | 18 April 2024 |
| CN | 114207873 | A | 18 March 2022 | WO | 2022205032 | A1 | 06 October 2022 |
| CN | 116936738 | A | 24 October 2023 | | None | | |
| CN | 116936931 | A | 24 October 2023 | | None | | |
| CN | 117059899 | A | 14 November 2023 | | None | | |
| US | 2022123366 | A1 | 21 April 2022 | JP | 2022545896 | A | 01 November 2022 |
| | | | | JP | 7357769 | B2 | 06 October 2023 |
| | | | | US | 2023327209 | A1 | 12 October 2023 |
| | | | | KR | 20220038494 | A | 28 March 2022 |
| | | | | ES | 2934127 | T3 | 17 February 2023 |
| | | | | US | 11735775 | B2 | 22 August 2023 |
| | | | | WO | 2021108995 | A1 | 10 June 2021 |
| | | | | EP | 3913721 | A1 | 24 November 2021 |
| | | | | EP | 3913721 | A4 | 30 March 2022 |
| | | | | EP | 3913721 | B1 | 23 November 2022 |
| | | | | PL | 3913721 | T3 | 27 February 2023 |
| WO | 2021110165 | A1 | 10 June 2021 | CN | 110911752 | A | 24 March 2020 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311598064

**Non-patent literature cited in the description**

- Chemical Reagent - General Rules for Gas Chromatography. *GB/T 9722-2006*
- General Rules for Mass Spectrometric Analysis. *GB/T 9722-2006*
- Analytical Method for Lithium Hexafluorophosphate. *GB/T 19282-2014*
- General Rules for Ion Chromatography. *GB/T 34672-2017*